# EUROPEAN PATENT APPLICATION

(11) **EP 3 827 652 A1**
(43) Date of publication of application: **02.06.2021**
(21) Application number: 19212670.4
(22) Date of filing: 29.11.2019
(51) Int. Cl.: A01B 15/14, A01B 23/04

(54) **FRAME FOR AGRICULTURAL IMPLEMENTS**

(71) Applicant: CNH Industrial Sweden AB, 590 96 Överum (SE)
(72) Inventor: Hertzog, Daniel, 59376 Blackstad (SE); Linderson, Bengt Per-Inge, 594 94 Odensvi (SE); Wallin, Per Dennis, 693 37 Västervik (SE); Nilsson, Carl Ola Fredrik, 59340 Västervik (SE); Svensson, Robert, 59095 Loftahammar (SE); Nåhdin, Rickard Karl Gustav, 59492 Gamleby (SE)
(74) Representative: CNH Industrial IP Department

(57) **Abstract**

The present disclosure relates to a frame (100) for an agricultural implement, the frame being able to support a plurality of ground engaging tools and extending between a first end that is connectable to an agricultural work vehicle and an opposite, second end, wherein the frame comprises a main frame (102) defining at least one cavity (112) extending at least partly between the first and second end of the frame (100), and wherein a sub-frame (114) is received within the at least one cavity (112) of the main frame (102).

## Description

### Background of the Invention

The present disclosure relates to a frame for an agricultural implement, particularly, but not exclusively, to a frame for an agricultural plough. Other aspects relate to an agricultural implement comprising the frame and an agricultural machinery comprising the agricultural implement connected to a tractor.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective alternatives of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Ploughs typically include a plurality of plough bodies connected to a plough frame in a laterally offset manner. Each plough body is connected to the plough frame via corresponding beams. The plough frame, in turn, is connected to a towing or pushing vehicle via a headstock arranged at a front or back end of the frame.

Most modern ploughs are of the reversible type, in which the frame of the plough is rotatable by 180 degrees (reversed) with respect to the headstock. A turning cylinder attached to the headstock may be used to rotate (reverse) the plough. Before rotating the plough, the frame is lifted by a towing vehicle that is connected to the headstock end of the frame. The reversal process may commence once the frame is lifted sufficiently high that all of the plough bodies are elevated above the ground. During rotation of the so elevated frame, a first set of plough bodies, which is initially arranged below the frame (first configuration), is transferred to the top of the frame. At the same time, a second set of plough bodies, which is initially arranged on top of the frame, is then transferred to a position below the frame. The reversible plough is then in its second configuration. This process works both ways, such that the frame may also be rotated back to its first configuration. Whenever the plough is reversed, the first and the second set of plough bodies swap position.

Depending on the number of plough bodies provided, ploughs can weigh several tons, a weight that is lifted by the towing vehicle during every reversal process. As the plough bodies are lifted off the ground, the plough weight is transferred to the tractor via the main frame and the headstock. It follows that the main frame is required to withstand significant and repeated bending moments without failure. Main frames that exhibit the required stability are likely to be large and heavy and may cause increased fuel consumption of the ploughing machinery. This is particularly problematic in view of ever increasing demands to increase fuel efficiency and reduce environmental impact. Similarly, farmers tend to prefer smaller towing vehicles with lower overall performance, resulting in a need for lighter ploughs that may be lifted with smaller machinery.

In view of the aforementioned problem, there is a need for improved ploughs, particularly plough frames.

It is an aim of the present disclosure to solve or at least ameliorate one or more problems of the prior art.

### Summary of the Invention

Aspects and embodiments of the disclosure provide an agricultural implement and an agricultural machinery as claimed in the appended claims.

According to a first aspect of the present disclosure, there is provided a frame for an agricultural implement, the frame being able to support a plurality of ground engaging tools and extending between a first end that is connectable to an agricultural work vehicle and an opposite, second end, wherein the frame comprises a main frame defining at least one cavity extending at least partly between the first and second end of the frame, and wherein a sub-frame is received within the at least one cavity of the main frame.

Use of such a sub-frame can advantageously provide reinforcement for the main frame such that the sub-frame increases the structural integrity of the overall frame.

The sub-frame may be permanently connected to the main frame.

The sub-frame and the main frame may be formed as a unitary structure.

The sub-frame may be connected to at least one inner surface of the main frame.

The sub-frame may be a hollow frame defining a second cavity within the at least one cavity of the main frame.

The main frame may comprise first and second walls defining parts of the cavity. The first and second walls may extend between the first and the second end of the main frame. The sub-frame may be arranged between the first and second walls of the main frame.

The main frame may have a rectangular cross-section or a U-shaped cross-section.

At least one sub-cavity may be formed between an inner surface of the main frame and an outer surface of the sub-frame.

The sub-frame may have a rectangular cross-section.

The sub-frame may be oriented at an offset of around 45 degrees with respect to the main frame.

The sub-frame may have a circular cross-section.

The main frame and the sub-frame may be made from the same material.

The main frame may comprise at least one aperture for accessing the at least one cavity from outside of the main frame.

According to another aspect of the present disclosure, there is provide an agricultural implement comprising the above frame. In one embodiment, the agricultural implement may be a plough, for example a reversible plough, comprising one or more plough bodies connected to the frame.

In other aspects of the disclosure, an agricultural machinery is provided comprising the above agricultural implement connected to the front and/or rear of an agricultural vehicle, e.g. a tractor.

The agricultural vehicle may include one or more control devices, such as but not limited to programmable or non-programmable processors. Similarly, the agricultural implement may include one or more control devices, such as but not limited to programmable or non-programmable processors. Additionally, or alternatively, the agricultural implement may be controlled by one or more control devices of the agricultural vehicle. Similarly, the agricultural vehicle may be controlled by one or more control devices of the agricultural implement.

The agricultural vehicle and/or the agricultural implement may be remote controlled, e.g. from a farm office. Accordingly, the agricultural vehicle may include one or more communication interfaces for connection to a remote processor and/or a remote controller. Similarly, the agricultural implement may include one or more communication interfaces for connection to a remote processor and/or a remote controller.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

One or more embodiments of the present disclosure will now be described by way of example only, with reference to the accompanying drawings, in which:
Figures 1A to 1C show various views of an agricultural plough;
Figure 2 shows a schematic view of an agricultural machinery in a working field;
Figures 3A to 3F show schematic cross-sections of frames according to various embodiments of the present disclosure.

### Detailed Description of the Drawings

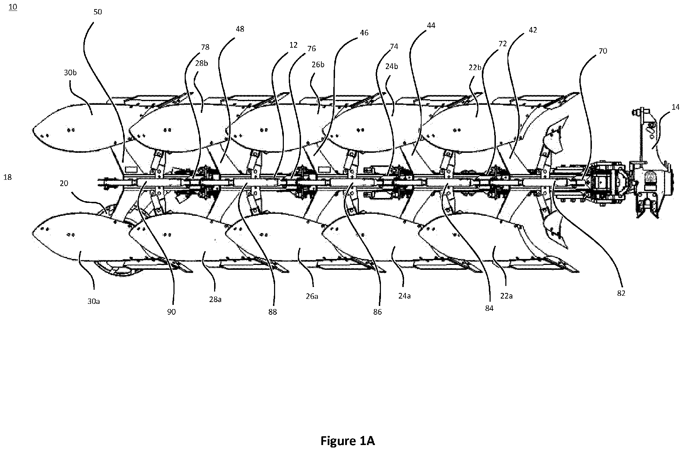

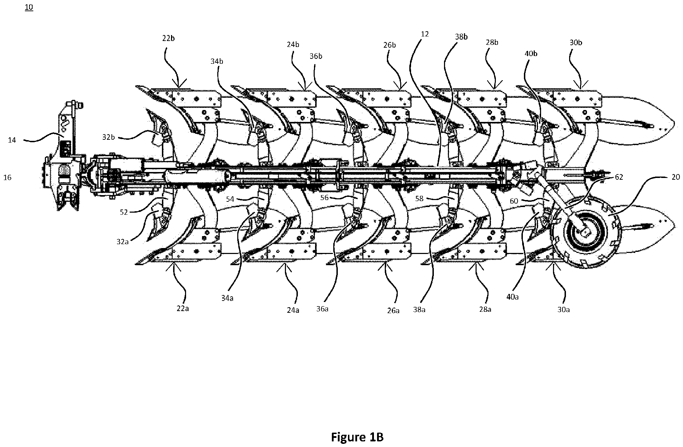

Figures 1A to 1C show various views of an agricultural implement, particularly a plough 10. As will be described in more detail below, the plough 10 shown in Figures 1A to 1C is a reversible plough.

The plough 10 comprises a frame 12. The frame 12 extends between a headstock 14 at a first, front end 16 of the plough towards a second, rear end 18 of the plough. The frame 12 supports a variety of ground-engaging tools. In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. Each of the plough bodies 22a, 22b, 24a, 24b, 26a, 26b, 28a, 28b, 30a, 30b are connected to the frame 12 by means of beams 42, 44, 46, 48, 50. Each of the beams 42, 44, 46, 48, 50 has a substantially Y-shaped structure to support pairs of plough bodies.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the beams 42, 44, 46, 48, and 50 of the plough 10 shown in Figures 1A to 1C includes a hydraulic stone-trip mechanism. To this end, each of the Y-shaped beams 42, 44, 46, 48, 50 is pivotable with respect to the frame 12 about pivots of a corresponding beam housing 70, 72, 74, 76, 78, such that each of the beams 42 to 50 can pivot their respective plough bodies 22a, 22b, 24a, 24b, 26a, 26b, 28a, 28b, 30a, 30b out of the soil, when the latter hits a subterranean obstacle, such as a stone buried in the soil. To avoid pivotal movement of the beams 42, 44, 46, 48, 50 and thus also a withdrawal of the corresponding plough bodies 22a to 30b from the soil during normal operation, i.e. when no subterranean obstacle is encountered, the beams are biased into a working position (horizontal position shown in Figure 1A) by means of hydraulic actuators 82, 84, 86, 88, and 90. Depending on the hydraulic pressure within hydraulic actuators 82 to 90, a bias-force is applied to the beams 42 to 50 biasing the beams into their working position (horizontal position in Figure 1A). A pivotal movement of the beams 42 to 50 is only possible if the bias-force of the hydraulic actuators 82 to 90 is overcome by a drag-force experienced by the plough bodies 22a to 30b working the soil. The bias-force of the hydraulic actuators 82 to 90 is adjusted such that the drag-force experienced by the plough bodies 22a to 30b is only overcome if significant obstacles are encountered.

Each of the hydraulic actuators 82 to 90 may be connected to an individual accumulator. Alternatively, or additionally, the hydraulic actuators 82 to 90 may be connected to a common hydraulic accumulator.

Each of the pairs of plough bodies 22a, 22b, 24a, 24b, 26a, 26b, 28a, 28b, 30a, 30b is designed to create a furrow in the field when the plough is dragged behind or pushed by an agricultural vehicle such as a tractor. It follows that each run of the illustrated plough 10 through a field creates five adjacent furrows.

Skimmers 32a, 32b, 34a, 34b, 36a, 36b, 38a, 38b, 40a, 40b are attached in front of the plough bodies 22a, 22b, 24a, 24b, 26a, 26b, 28a, 28b, 30a, 30b. A first pair of skimmers 32a, 32b is arranged in front the first pair of plough bodies 22a, 22b. A second pair of skimmers 34a, 34b is arranged in front of the second pair of plough bodies 24a, 24b. A third pair of skimmers 36a, 36b is attached in front of the third pair of plough bodies 26a, 26b. A fourth pair of skimmers 38a, 38b is attached in front of the fourth pair of plough bodies 28a, 28b. A fifth pair of skimmers 40a, 40b is attached in front of the fifth pair of plough bodies 30a, 30b.

The skimmers 32a, 32b, 34a, 34b, 36a, 36b, 38a, 38b, 40a, 40b are arranged higher than their corresponding plough bodies 22a, 22b, 24a, 24b, 26a, 26b, 28a, 28b, 30a, 30b to not penetrate the soil as far as the plough bodies. It follows that the skimmers 32a, 32b, 34a, 34b, 36a, 36b, 38a, 38b, 40a, 40b are configured to only lift a top layer off the ground surface before the soil is turned over by the plough body that is arranged immediately behind the skimmer.

Each pair of skimmers 32a, 32b, 34a, 34b, 36a, 36b, 38a, 38b, 40a, 40b is attached to the frame 12 by means of a corresponding mounting assembly 52, 54, 56, 58, 60.

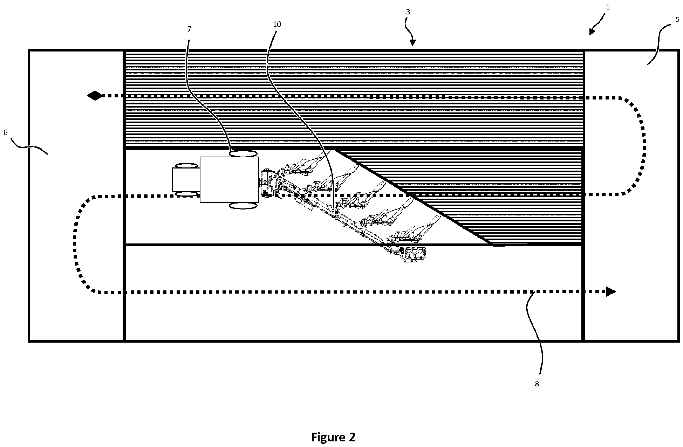

Turning to Figure 2, a typical operation of agricultural machinery comprising a tractor 7 and a plough 10 is described. In use, the plough 10 is drawn as an attachment (implement) behind a towing vehicle (e.g. tractor 7). It will be appreciated that it is equivalently feasible to locate the plough 10 in front or both in front and behind the tractor 7.

Figure 2 shows a schematic work area 1, e.g. a crop field, which is divided into a main field 3 and headlands 5,6. A tractor 7 draws the plough 10 across the main field 3 in generally parallel working rows. The working rows are part of the trajectory of the tractor and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row the tractor 7 and plough 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5 and 6 more than necessary, it is known to lift the ground engaging tools, such as the plough bodies and the skimmers, off the ground into a headland or transfer position, just before the plough 10 reaches the headlands 5 or 6 respectively. Once the tractor 7 and the corresponding plough 10 have turned on the headland 5, 6, the ground engaging tools of the plough 10 are, again, lowered towards an operating position to engage the soil of the main field 3.

In the illustration of Figure 2, the plough 10 is working on the main field 3 and, therefore, is arranged in the operating position. As the plough 10 reaches the border between the headland 5/6 and the main field 3, the plough 10 is transferred to a transfer position. It follows that each working row starts with an adjustment of the plough from the transfer position into the operating position and ends with an adjustment of the plough from the operating position into the transfer position.

The plough 10 shown in Figures 1A to 1C is of the fully-mounted type. In fully-mounted ploughs, the weight of the plough is carried exclusively by the tractor, when the plough is in its transfer position (on the headlands). In other words, the plough is then exclusively supported by the tractor 7 via headstock 14 and maybe lifted off the ground with a lift cylinder of a tractor linkage.

During the turning movement on the headlands, the plough 10 is also reversed. That is, the frame 12 is rotated by about 180 degrees with respect to the headstock 14 to move the plough from a first configuration to a second configuration. It will be appreciated that if the operator is ploughing in the furrow (as shown in Figure 4), then the frame 12 may not be rotated by exactly 180 degrees, it is more likely to be 190-200 degrees or 160-170 degrees depending on which direction the frame 12 turns. If the operator is ploughing on-land, then the frame 12 may be rotated by an angle that is closer to 180 degrees, perhaps exactly 180 degrees.

In its first configuration shown in Figures 1A to 1C, the plough 10 is set up such that a first plurality of ground engaging tools, such as plough bodies 22a, 24a, 26a, 28a, and 30a, are in contact with the soil. In its second configuration (not illustrated), the plough 10 is set up such that a second plurality of ground engaging tool, such as plough bodies 22b, 24b, 26b, 28b, and 30b, are in contact with the soil.

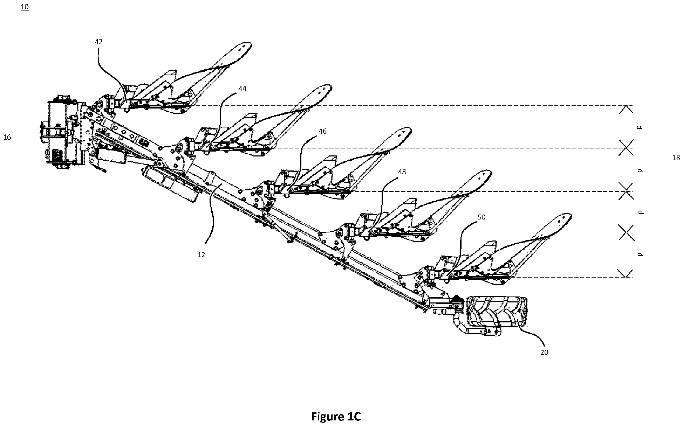

Tilling the field with the plough 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C.

As the reversible plough 10 reaches the end of the first run, the frame 12 is rotated by 180 degrees (reversed) with respect to the headstock 14. A turning cylinder (not shown), attached to the headstock 14 is typically used to rotate (reverse) the plough 10. During rotation of the frame, the first set of plough bodies, e.g. 22a, 24a, 26a, 28a, 30a, are transferred to the top of the plough 10. At the same time, the second set of plough bodies e.g. 22b, 24b, 26b, 28b, 30b, that were not in use in the previous run is then transferred to the lower end of the plough 10 and will be submerged in the soil during the next run. The reversible plough is then in its second configuration (not shown).

Executing a second run of the field with the plough 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough 10 between consecutive runs has the advantage that the plough bodies 22a, 22b, 24a, 24b, 26a, 26b, 28a, 28b, 30a, 30b that engage the soil always face the same end of the field, irrespective of the tractor's orientation.

In both configurations of the plough implement 10 the frame 12 is supported by an implement wheel 20. The implement wheel 20 is arranged at the back end 18 of the plough implement 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the frame via beams 42, 44 46, 48 and 50 or rails 52, 54, 56, 58, 60, there is no possibility of adjusting the working depth of said ground engaging tools without changing the ground clearance of the frame 12. To this end, the plough 10 shown in Figures 1A to 1C includes implement wheel 20, which acts as a depth wheel to adjust the ground clearance of the frame 12. A linkage 62 provided between the implement wheel 20 and the frame 12 allows the operator to lift or lower the frame 12 with respect to a ground surface 80. The linkage 62 may be connected to an actuator, e.g. a hydraulic cylinder (not shown), for adjusting the distance between the implement wheel 20 and the frame, thereby lifting and lowering the frame. The linkage 62 and the actuator together form a depth adjustment apparatus for the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b. Since the position of the plurality of first and second ground engaging tools is fixed with respect to the frame 12, any change in the frame's ground clearance will also affect the working depth of the plurality first and second ground engaging tools. In particular, if the frame 12 is lowered by shortening the linkage 62 between implement wheel 20 and the frame 12, then the working depth of the plurality of first ground engaging tools shown in Figures 1A to 1C is increased, i.e. the plurality of first ground engaging tools are lowered further into/towards the soil. If the frame 12 is lifted, by extending the linkage 62 between implement wheel 20 and the frame 12, then the working depth of the plurality of first ground engaging tools is decreased, i.e. the plurality of first ground engagement tools are either raised or completely pulled out of the soil. It will be appreciated that extending and retracting the linkage 62 will mainly raise or lower the back end of the plough implement 10. In order to evenly raise the front and the back end of the plough implement 10, the headstock 14 may be raised or lowered together with an adjustment of the linkage 62 of the implement wheel 20. Raising or lowering the headstock may be achieved by means of hydraulic cylinders connected to lifting arms of the agricultural work vehicle that carry the headstock 14.

It will be appreciated that agricultural implements like the plough 10 in Figures 1A to 1C have a significant weight, which is lifted by an agricultural vehicle (e.g. a tractor) at the end of each run. The weight of the plough 10 is transferred to the tractor via the headstock 14 and the frame 12 attached to headstock 14. It follows that the integrity of the frame 12 needs to be sufficient to withstand the bending moment introduced by the plough bodies 22a, 22b, 24a, 24b, 26a, 26b, 28a, 28b, 30a, 30b and the skimmers 32a, 32b, 34a, 34b, 36a, 36b, 38a, 38b, 40a and 40b. One solution may be to construct a heavy frame including thick side walls. However, in order to provide a more lightweight main frame, the present disclosure suggests constructing the frame with a frame-in-frame structure. Embodiments of such frames for agricultural implements are described in more detail below with reference to the following figures.

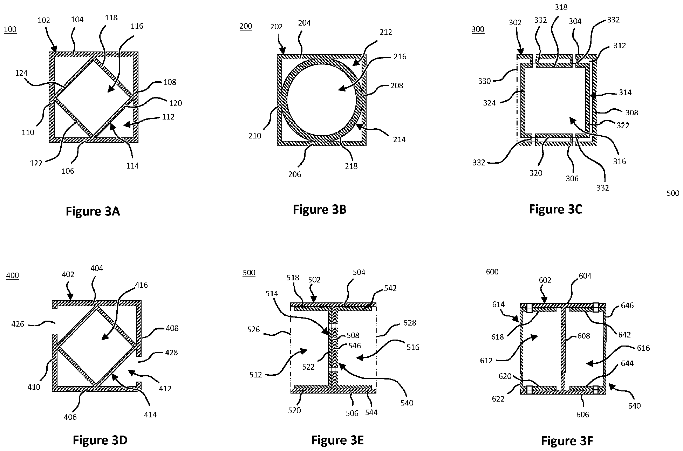

Figures 3A to 3F show schematic cross-sections of various embodiments of frames according to the present disclosure. A first embodiment of a frame 100 is shown in a schematic cross-section in Figure 3A. The frame 100 has a main frame 102 and a sub-frame 114. The main frame 102 has a substantially rectangular shape and defines a cavity 112 extending between the first and second ends (not shown) of the main frame 102. The cavity defined by the main frame 102 may be sized and shaped to receive a number of hydraulic and electrical lines that connect various actuators and sensors of the plough implement with corresponding supply and control systems. It should be noted that the cavity 112 may also only extend along parts of the length of the main frame 102 between its first and second end.

The cavity 112, of Figure 3A, is enclosed by four walls 104, 106, 108, 110. As illustrated, a first wall 104 of the main frame 102 is arranged opposite to and in parallel with a second wall 106. The first and second walls 104, 106 of the main frame 102 are connected by perpendicular third and fourth walls 108, 110. A third wall 108 extends between first side edges of the first and second walls 104, 106. A fourth wall 110 of the main frame 102 extends between second side edges of the first and second walls 104, 106 that are opposite to the first side edges connected by the third wall 108.

In the illustration of Figure 3A, the first wall 104 may be an upper wall of the main frame 102 in its first configuration. It follows that the second wall 106 is a lower wall in the first configuration of the main frame 102. The third and fourth walls 108, 110 are side walls of the main frame 102 that connect the first and second walls 104, 106 along opposite side edges.

The sub-frame 114 is located inside the cavity 112 of the main frame 102. The sub-frame 114 of Figure 3A is also rectangular in cross-section. However, the sub-frame 114 of the embodiment shown in Figure 3A is rotated by about 45 degrees with respect to the main frame 102. The sub-frame 114 defines a second cavity 116 within the sub-frame 114. The sub-frame 114 comprises four walls 118, 120, 122, 124. The four walls 118, 120, 122, 124 define the second cavity 116.

In the embodiment of Figure 3A, side edges of the rectangular sub-frame 114 are connected to inner surfaces of the main frame 102. In particular, the frame 100 of Figure 3A is a unitary structure, i.e. the main frame 102 and the sub-frame 114 are produced as a single piece. The edges of the sub-frame 114 connect with inner surfaces of the mainframe 102. In particular, a first side edge between the first wall 118 and the first wall 120 of the sub-frame 114 is connected to an inner surface of the third side wall 108 of the main frame 102. A side edge between the second wall 120 and the third wall 122 is connected to an inner surface of the second wall 106 of the main frame 102. A third side edge between the third wall 122 and the fourth wall 124 of the sub-frame 114 is connected to an inner surface of the fourth wall 110 of the main frame 102. A fourth side edge between the fourth wall 124 and the first wall 118 of the sub-frame 114 is connected to an inner surface of the first wall 104 of the main frame 102. It follows that the sub-frame 114 separates the cavity 112 of the main frame 102 into five sub-cavities. A first sub-cavity is the second cavity 116 defined by the inner surfaces of the sub-frame 114. Four other sub-cavities are provided between outer surfaces of the walls 118, 120, 122, and 124 of the sub-frame 114 and inner surfaces of the walls 104, 106, 108, 110 of the main frame 102. It will be appreciated that each of the sub-cavities may be used to receive hydraulic ducts and/or electric wires. In some examples, one or more of these sub-cavities can define a hydraulic / fluid channel.

The sub-frame 114 acts as a reinforcement frame for the main frame 102, the sub-frame 114 increasing the structural integrity of the overall frame 100.

The main frame 102 and the sub-frame 114 of Figure 3A are preferably made of the same material. As mentioned above, in the embodiment of Figure 3A, the main frame 102 and the sub-frame 114 are produced as a single piece, for example in a single extrusion process. Alternatively, the sub-frame 114 may be permanently connected to the inner surfaces of the main frame 102 by means of welding or gluing. In this example, the main frame 102 and the sub-frame 114 may advantageously be produced separately and permanently attached to each other in a subsequent manufacturing step.

Figure 3B shows another embodiment of a frame according to the present disclosure. The frame 200 shown in Figure 3B again comprises a main frame 202 and a sub-frame 214. Parts of the frame 200 that have the same functionality as parts of the frame 100 shown in Figure 3A are labelled with corresponding reference signs increased by "100". The frame 200 comprises a main frame 202 with four walls 204, 206, 208, and 210. The walls 204, 206, 208, 210 correspond to the walls 104, 106, 108, and 110 of Figure 3A. In other words, the main frame of 202 is rectangular in cross-section. In contrast to the embodiment of Figure 3A, the sub-frame 214 of the embodiment shown in Figure 3B has a circular cross-section. Accordingly, the sub-frame 214 includes a single, circumferential wall 218. The circumferential wall 218 of Figure 3B contacts inner surfaces of the walls 204, 206, 208, and 210 of the main frame 202. Since the sub-frame 214 of Figure 3B is produced as a single piece together with the main frame 202, the outer surfaces of the circumferential wall 218 are permanently connected to the inner surfaces of the walls 204, 206, 208, and 210. The sub-frame 214 divides the cavity 212 of the main frame 202 into four sub-cavities. Another, second cavity 216 is defined inside the sub-frame 214. The second cavity 216 is defined by an inner surface of the circumferential wall 218 of the sub-frame 214. Accordingly, the second cavity 216 is a cylindrical cavity extending at least partly within the cavity 212 of the main frame 202. Four additional sub-cavities are provided between an outer surface of the circumferential wall 218 and inner surfaces of the wall 204, 206, 208, 21 0 of the main frame 202.

The circular design of the sub-frame 214 allows for larger contact areas between the outer surface of the sub-frame 214 and the inner surfaces of the main frame 202, which results in better support of the main frame by the sub-frame 214. The frame 200 of Figure 3B, therefore, exhibits a slightly increased stability.

A further embodiment of a frame according to the present disclosure is shown in Figure 3C in a schematic cross-section. The frame 300 shown in Figure 3C comprises a main frame 302 with a substantially U-shaped cross-section. The main frame 302 includes a first wall 304, which is arranged opposite to a second wall 306. The first and second walls 304, 306 are arranged in parallel and on opposite sides of the main frame 302.

A third wall 308 is arranged perpendicularly to the first and second walls 304, 306. The third wall 308 connects the first and second walls 304, 306 along corresponding side edges. On an opposite side to the third wall 308, the main frame 302 comprises an open end or void 330 defining an aperture for accessing a cavity 312 from the outside of the main frame 302. The cavity 312 is defined by the walls 304, 306, 308 and may extend partly or fully along a longitudinal direction of the main frame 302.

A sub-frame 314 is located inside the cavity 312 of the main frame 302. The sub-frame 314 has a substantially rectangular cross-section. The sub-frame 314 comprises a first wall 318, which is arranged opposite to a second wall 320. The first and second walls 318, 320 are arranged in parallel and on opposite sides of the sub-frame 314.

A third wall 322 is arranged perpendicularly to the first and second walls 318, 320. The third wall 322 connects the first and second walls 318, 320 along corresponding side edges. At an opposite side to the third wall 322, a fourth wall 324 is provided. The fourth wall 324 extends perpendicularly to the first and second walls 318, 320 and in parallel with the third wall 322. The third wall connects corresponding side edges of the first and second walls 318, 320 at an opposite end to the third wall 322.

The sub-frame 314 defines a second cavity 316 inside the walls 318, 320, 322, 324 of the sub-frame 314. The sub-frame 314 of the embodiment shown in Figure 3C may be removably connected to the main frame 302. Outer surfaces of the first and second walls 318, 320 of the sub-frame 314 may be connected to inner surfaces of the first and second walls 304, 306 of the main frame 302. The sub-frame 314 may be inserted into the cavity 312 of the main frame 302 via the void 330 and removably connected to the main frame 302 via suitable fastening members. In the embodiment of Figure 3C, spacers 332 are arranged between the outer surfaces of the sub-frame 314 and the inner surfaces of the main frame 302. The spacers 332 may allow for precise positioning of the sub-frame 314 within the cavity 312 with respect to the main frame 302.

Another embodiment of a frame according to the present disclosure is shown in Figure 3D in a schematic cross-section. The frame 400 of Figure 3D has a rectangular main frame 402 and a rectangular sub-frame 414, similar to the embodiment shown in Figure 3A. Parts of the frame 400 shown in Figure 3D with the same functionality as parts of the frame 100 shown in Figure 3A are labelled with corresponding reference signs increased by "300". The shape and arrangement of the main frame 402 and the sub-frame 414 shown in Figure 3D are substantially identical to the arrangement of Figure 3A. However, in contrast to the embodiment of Figure 3A, the main frame 402 of Figure 3D comprises a plurality of apertures allowing access to the cavity 412 of the main frame 402 via the outside of the frame 400. More particularly, the apertures of Figure 3D allow access to at least two of the four sub-cavities of the main frame 402.

A first aperture is a first opening 426 extending through the fourth wall 410 of the main frame 402. A second aperture is represented by a second opening 428 extending through the third wall 408 of the main frame 402. Of course, it will be understood that the first and second openings 426, 428 may equivalently extend through one or more of the remaining walls 404, 406, 408, 410.

In the embodiment of Figure 3D, the openings 426, 428 are cut outs extending through their respective walls 408, 410 partly along the length of the main frame 402 between its first and second end. In this example, the openings 426, 428 may be longitudinal slots. However, it is equivalently feasible to create openings (not shown) that extend all the way between the first and second ends of the main frame 402 and/or through any of the walls 404, 406, 408, 410.

The openings 426, 428 may facilitate introduction, maintenance, and removal of hydraulic ducts and/or electric wires housed in the cavity 412 of the main frame 402. Of course, it is also feasible to provide the sub-frame 414 with one or more apertures/openings (not shown) that allow access to the second cavity 416.

Turning to Figure 3E, there is shown yet another embodiment of the frame of the present disclosure. Figure 3E illustrates a frame 500 in a schematic cross-section. The frame 500 of the embodiment shown in Figure 3E comprises a main frame 502 with a substantially I-beam shaped cross-section. The main frame 502 of this embodiment has a first wall 504 and a second wall 506. The first and second walls 504, 506 are arranged in parallel on opposite sides of the main frame 502. The first and second walls 504, 506 are connected by a third wall 508. The third wall 508 extends perpendicular to the first and second walls 504, 506. In the illustrated embodiment, the third wall 508 is arranged in the centre of the first and second walls 504, 506.

The third wall 508 divides a space between the first and second walls 504, 506 into two cavities 512, 516. A first cavity 512 extends at least partly along the length of the main frame 502 on a first side of the third wall 508. A second cavity 516 extends at least partly along the length of the main frame 502 on an opposite, second side of the third wall 508.

The first cavity 512 of the main frame 502 is accessible via a first aperture, such as a first void 526 indicated by the dashed lines in Figure 3E. The second cavity 516 is accessible from the outside of the main frame 502 via a second aperture, such as a second void 528 shown by dashed lines in Figure 3E. The two cavities 512, 516 may be used to house various different hydraulic and electric lines required by the agricultural implement. In one example, one of the two cavities 512, 516 may be used to house electrical wiring, whereas the other of the two cavities 516 is used to house hydraulic lines. In this case, the third wall 508 acts as a physical separation between the hydraulic lines and the electric wires of the agricultural implement.

The frame 500 comprises a first sub-frame 514 located inside the first cavity 512 of the main frame 502. The first sub-frame 514 is substantially U-shaped in cross-section. The first sub-frame 514 comprises a first wall 518, which is arranged opposite to a second wall 520. The first and second walls 518, 520 are arranged in parallel and on opposite sides of the sub-frame 514. A third wall 522 is arranged perpendicularly to the first and second walls 518, 520. The third wall 522 connects the first and second walls 518, 520 along corresponding side edges. On an opposite side to the third wall 522, the first sub-frame 514 comprises an open end or void defining an aperture for accessing a cavity of the first sub-frame 514. The second cavity is defined by the walls 518, 520, 522. In the embodiment of Figure 3E, the second cavity coincides with the first cavity 512 of the main frame 502.

The frame 500 comprises a second sub-frame 540 located inside the second cavity 516 of the main frame 502. The second sub-frame 540 is substantially U-shaped in cross-section. The second sub-frame 540 comprises a first wall 542, which is arranged opposite to a second wall 544. The first and second walls 542, 544 are arranged in parallel and on opposite sides of the sub-frame 540. A third wall 546 is arranged perpendicularly to the first and second walls 542, 544. The third wall 546 connects the first and second walls 542, 544 along corresponding side edges. On an opposite side to the third wall 546, the second sub-frame 540 comprises an open end or void defining an aperture for accessing a cavity of the second sub-frame 540. The second cavity is defined by the walls 542, 544, 546. In the embodiment of Figure 3E, the second cavity coincides with the second cavity 516 of the main frame 502.

The first and second sub-frames 514, 540 are removably connected to the main frame 502. In particular, the third wall 522 of the first sub-frame 514 is removably connectable to the third wall 508 of the main frame 502. The third wall 546 of the second sub-frame 540 is, in turn, removably connectable to an opposite side of the third wall 508 of the main frame 512. As shown in Figure 3E, the third walls 508, 522, 540 of the main frame 502, the first sub-frame 514, and the second sub-frame 540 may comprise corresponding openings to receive removable fasteners (not shown) for connecting the third walls 508, 522, 546 of the respective main frame 502, first sub-frame 514, and second sub-frame 540 with each other.

Outer surfaces of the first walls 518, 542 of the first and second sub-frames 514, 540 of the frame 500 may be connected to an inner surface of the first wall 504 of the main frame 502. Outer surfaces of the second walls 520, 544 of the first and second sub-frames 514, 540 may be connected to inner surfaces of the second wall 506 of the main frame 502.

Figure 3F shows a further still embodiment of a frame 600 of the present disclosure in a schematic cross-section. Features of Figure 3F that are also illustrated in Figure 3E are labelled with corresponding reference signs increased by "100".

The frame 600 of the embodiment shown in Figure 3F comprises a main frame 602, a first sub-frame 614 and a second sub-frame 640. As will be discussed below, each of these components has a similar structure to the corresponding components of Figure 3E, although they are oriented relative to each other differently. Therefore, some of the structural description of those components will be not necessarily be repeated here.

The main frame 602 has a substantially I-beam shaped cross-section. The main frame 602 has a first wall 604, a second wall 606 and a third wall 608, which define a first cavity 612 and a second cavity 616.

The first sub-frame 614 is substantially U-shaped in cross-section, having a first wall 618, a second wall 620, and a third wall 622. At an opposite side to the third wall 622, the first sub-frame 614 comprises an open end. In the embodiment of Figure 3F, the open end of the first sub-frame 614 faces (and in this example is proximal to) the third wall 608 of the main frame 602. The third wall 622 of the first sub-frame 614 is distal from the third wall 608 of the main frame 602. The third wall 622 of the first sub-frame 614 can extend between opposing distal edges of the first wall 604 and the second wall 606 of the main frame 602 when the main frame 602 is connected to the first sub-frame 614. In this way, the first sub-frame 614 can be considered as closing off the first cavity 612.

The second sub-frame 640 is also substantially U-shaped in cross-section, having a first wall 642, a second wall 644, and a third wall 646. At an opposite side to the third wall 646, the second sub-frame 640 comprises an open end. In the embodiment of Figure 3F, the open end of the second sub-frame 640 faces (and in this example is proximal to) the third wall 608 of the main frame 602. The third wall 646 of the second sub-frame 640 is distal from the third wall 608 of the main frame 602. The third wall 646 of the second sub-frame 640 can extend between opposing distal edges of the first wall 604 and the second wall 606 of the main frame 602 when the main frame 602 is connected to the second sub-frame 640. In this way, the second sub-frame 640 can be considered as closing off the second cavity 616.

The first and second sub-frames 614, 640 are removably connected to the main frame 602.

The first wall 618 of the first sub-frame 614 is removably connectable to the first wall 604 of the main frame 602. More particularly, to a portion of the first wall 604 of the main frame 602 that is on one side of the third wall 608 of the main frame 602. The second wall 620 of the first sub-frame 614 is removably connectable to the second wall 606 of the main frame 602. More particularly, to a portion of the second wall 606 of the main frame 602 that is on one side of the third wall 608 of the main frame 602.

The first wall 642 of the second sub-frame 640 is removably connectable to the first wall 604 of the main frame 602. More particularly, to a portion of the first wall 604 of the main frame 602 that is on the other side of the third wall 608 of the main frame 602. The second wall 644 of the second sub-frame 640 is removably connectable to the second wall 606 of the main frame 602. More particularly, to a portion of the second wall 606 of the main frame 602 that is on the other side of the third wall 608 of the main frame 602.

The frame 600 of Figure 3F can have good torsion stiffness, and can enclose provide enclosed cavities 612, 616 when the first sub-frame 614 and the second sub-frame 640 are connected to the main frame 602.

It will be appreciated that the features described with reference to the above embodiments should not be considered in isolation. Rather, the frame of the present disclosure may include any combination of features that have been described above. For example, the main frame and the one or more sub-frames may have various different shapes and sizes and a variety of access openings. Any of the main frames and sub-frames described above may be permanently or removably connected to each other by any suitable means.

The listing or discussion of an apparently prior-published document in this specification should not necessarily be taken as an acknowledgement that the document is part of the state of the art or is common general knowledge.

Preferences and options for a given aspect, feature or parameter of the disclosure should, unless the context indicates otherwise, be regarded as having been disclosed in combination with any and all preferences and options for all other aspects, features and parameters of the disclosure.

## Claims

1. A frame (100) for an agricultural implement, the frame (100) being able to support a plurality of ground engaging tools and extending between a first end that is connectable to an agricultural work vehicle and an opposite, second end, wherein the frame (100) comprises a main frame (102) defining at least one cavity (112) extending at least partly between the first and second end of the frame (100), and wherein a sub-frame (114) is received within the at least one cavity (112) of the main frame (102).

2. The frame (100) of Claim 1, wherein the sub-frame (114) is permanently connected to the main frame (102).

3. The frame (100) of Claim 1, wherein the sub-frame (114) and the main frame (102) are formed as a unitary structure.

4. The frame (100) of any of Claims 1 to 3, wherein the sub-frame (114) is connected to at least one inner surface of the main frame (102).

5. The frame (100) of any of Claims 1 to 4, wherein the sub-frame (114) is a hollow frame defining a second cavity (116) within the at least one cavity (112) of the main frame (102).

6. The frame (100) of any of Claims 1 to 5, wherein the main frame (102) comprises first and second walls (104, 106) defining parts of the cavity (112), the first and second walls extending between the first and the second end of the main frame (102), and wherein the sub-frame (114) is arranged between the first and second walls of the main frame (102).

7. The frame (100) of any of Claims 1 to 6, wherein the main frame (102) has a rectangular cross-section or a U-shaped cross-section.

8. The frame (100) of any of Claims 1 to 7, wherein at least one sub-cavity is formed between an inner surface of the main frame (102) and an outer surface of the sub-frame (114).

9. The frame (100) of any of Claims 1 to 8, wherein the sub-frame (114) has a rectangular cross-section.

10. The frame (100) of any of Claim 9 wherein the sub-frame (114) is oriented at an offset of around 45 degrees with respect to the main frame (102).

11. The frame (100)of any of Claims 1 to 8, wherein the sub-frame (214) has a circular cross-section.

12. The frame (100) of any of Claims 1 to 9, wherein the main frame (102) and the sub-frame (114) are made from the same material.

13. The frame (100) of any of Claims 1 to 12, wherein the main frame (102) comprises at least one aperture for accessing the at least one cavity (112) from outside of the main frame (102).

14. An agricultural implement comprising the frame (100) of any of Claims 1 to 13 and a plurality of ground engaging tools connected to the main frame (102).

15. An agricultural machinery comprising an agricultural work vehicle and the agricultural implement according to Claim 14.
